# EUROPEAN PATENT APPLICATION

(11) **EP 1 075 894 A2**
(43) Date of publication of application: **14.02.2001**
(21) Application number: 00306683.4
(22) Date of filing: 04.08.2000
(51) Int. Cl.: B23Q 11/08, B23Q 5/56, B23Q 39/04

(54) **Driving connection arrangement and sealing arrangement for a live tool and method for sealing the same**

(30) Priority: 06.08.1999 US 147335 P; 02.08.2000 US
(71) Applicant: Hardinge, Inc., Elmira, New York 14902-1507 (US)
(72) Inventor: Sheehan, Terrance, Elmira, NY 14901 (US); Merzejewski, Jacek, Horseheads, NY 14845 (US); Sheehan, Brian C., Elmira, NY 14901 (US); Comstock, Gary L., Gillette, Pennsylvania 12695 (US)
(74) Representative: Matthews, Heather Clare

(57) **Abstract**

The present invention is directed to a live tool assembly adapted to be received within a machine tool assembly. The live tool includes a coupling assembly for transferring rotational motion of a drive gear assembly to a drive shaft assembly and a backlash adjustment assembly for adjusting the backlash between the drive gear assembly and the drive source of the machine tool. The live tool assembly further includes a sealing assembly for preventing contaminants from entering an interior of the housing by maintaining a positive pressure differential between the interior of the housing and an exterior of the live tool assembly.

## Description

### CROSS REFERENCE TO RELATED APPLICATION

The present invention relates to and claims priority on U-S. Provisional Patent Application Serial No. 60/147,335, entitled "Live Tool," filed on August 6, 1999.

### FIELD OF THE INVENTION

The present invention relates to a live tool for use in machining operations. The tool is particularly applicable for use with an indexing tool turret for a machine tool. In particular, the present invention relates to a unique sealing arrangement for a live tool to prevent contaminants from damaging the live tool. In addition, the present invention is to an improved connection between the pinion gear of the tool turret and a drive shaft of the live tool.

### BACKGROUND OF THE INVENTION

Live tools, especially for use with indexing tool turrets of a machine tool have found widespread use in the machine tool industry. These tools allow for drilling, milling, boring etc. on a workpiece and complement stationary tools also used in the machining process. These tools can be used on indexing tool turrets to provide a multiple number of stationary and live tools that can be selectively indexed for machining the workpiece. One such type of indexing tool turret is disclosed in U.S. Provisional Patent Application No. 60/099,295, entitled "Indexing Tool Turret" and U.S. Patent Application No. 09/389,051, entitled "Indexing Tool Turret," both applications are assigned to the same assignee as the present application, and are specifically incorporated by reference herein.

Conventional live tools for use with indexing tool turrets usually are connected to a drive source associated with the indexing tool turret which in turn is used to rotate a cutting tool attached to the live tool assembly- Such types of live tools are sold by Global CNC Industries, Inc., Indexing Technologies, Inc., Benz, PCM Willen S.A., Exsys Tool Inc., Eppinger GmbH, Zettl GmbH, Ott-Jakob.

Such live tools operate in a relatively harsh environment of the machine tool and are exposed to dirt, cutting chips, oil contaminated with cutting chips and debris, etc. Therefore, it is advantageous to isolate the interior of the live tool from the exterior environment to prolong tool life and accuracy by slowing or preventing contaminants outside the tool from entering the interior of the tool and causing wear and degradation of the tool.

Conventional type live tools often use a conventional type seal for sealing contaminants from the interior of the tool when installed on the tool turret. Such seals usually have flexible lips or flanges that contact either a rotating or stationary surface with a contact pressure to seal the live tool and keep contaminants out. This contact pressure can create friction at the contact surfaces, such that the seal will degrade over time due to this friction, allowing contaminants into the live tool. The friction can also create undesirable heat that can deteriorate lubrication near the seal, such as in the bearing. Since the friction and heat are generally proportional to the rotational speed of the live tool, the maximum desirable speed of the live tool is limited by bearing life consideration.

In the case of through-tool coolant, the seal can also be damaged by cutting chips or other contaminants, thus also allowing contaminants to reach the interior of the tool. Further, it has been found that because of centrifugal forces, the seal operates better when the live tool is rotating but when the live tool is stationary, the seal is less effective and can allow coolant leakage and ingress of contaminants into the live tool. These contaminants can cause wear and damage to the tool, increasing downtime, and decreasing the accuracy of the tool.

It has also been found that the lubricant in the bearings in the live tool housing supporting the drive shaft of the live tool is exposed to the coolant. This coolant exposure can wash the lubricant out of the bearings and cause overheating and damage to the bearings due to lack of lubrication. This can also reduce the speed at which the live tool can be run, decreasing efficiency of the cutting operation.

Further, such conventional tools often use a bevel gear for mating with a pinion gear in the tool turret to provide driving power to the live tool. It has been found in conventional tools that the size of the tool turret and live tool have restricted the room available for the bevel gear of the live tool and the pinion gear of the tool turret. This has restricted the size of these gears and has resulted in gears having insufficient mating area to drive the live tool at full load and full speed without overheating the gears due to the high friction. For proper operation of the live tool, it is also important to have a proper backlash between the bevel gear of the live tool and the pinion gear of the tool turret. This backlash is often adjusted by altering a spacer or shim connected between the live tool bevel gear and the housing or drive shaft of the live tool. However, in conventional tools the contact surface of the spacer has been limited and has been found to be insufficient to handle the forces incurred at full load of the live tool.

### OBJECTS OF THE INVENTION

It is an object of the present invention to provide an air purge and seal mechanism for sealing the interior of a live tool from exterior contaminants that is less susceptible to wear and damage.

It is a further object of the present invention to provide a non-contact mechanism for sealing the interior of a live tool from exterior contaminants that minimizes friction resulting from the seal when the live tool is being driven.

It is a further object of the present invention to provide a live tool that decreases exposure of the bearings of the live tool to the coolant to decrease washing out of the lubrication in the bearings.

It is a further object of the present invention to provide an increased driving contact area between a tool turret drive pinion gear and a bevel gear of the live tool without increasing the overall size of the tool turret or live tool.

It is a further object of the present invention to provide an improved bevel gear backlash adjuster for a live tool that provides increased drive surface contact area and torque handling capability.

The foregoing and other objects, features, characteristics and advantages of the present invention as well as the methods of operation and functions of the related elements of structure, and the combination of pans and economies of manufacture, will be apparent from the following detailed description and the appended claims, taken in connection with the accompanying drawings, all of which form a part of the specification.

### SUMMARY OF THE INVENTION

In response to the foregoing challenges, applicants have developed an innovative live tool having a sealing arrangement that prevents contaminants from entering the tool assembly. Furthermore, applicants have developed an innovative live tool assembly that permits backlash adjustment between the a gear on the drive shaft with a drive source on the tool assembly while maintaining contact between the gear and the drive shaft.

The present invention is directed to a live tool assembly adapted to be received within a machine tool assembly. The machine tool assembly includes a drive source. The live tool assembly includes a housing having a drive shaft receiving bore formed therein. A drive shaft assembly is rotatably received within the drive shaft receiving bore. A drive gear assembly is located at one end of the drive shaft assembly, whereby the drive gear assembly is operatively coupled to the drive source of the machine tool. The live tool further include a coupling assembly for transferring rotational motion of the drive gear assembly to the drive shaft assembly. A sealing assembly may be provided for preventing contaminants from entering an interior of the housing, such that the sealing assembly maintains a positive pressure differential between the interior of the housing and an exterior of the live tool assembly.

In accordance with the present invention, the coupling assembly may include at least one finger extending from one of a bottom surface of the drive gear assembly and the one end of the drive shaft assembly. The coupling assembly may further include at least one notch on the other of the bottom surface of the drive gear assembly and the one end of the drive shaft assembly. Each finger is received within a complementary notch. The coupling assembly may further include a fastener for securing the drive gear assembly to the drive shaft assembly, such that the at least one finger is maintained within the at least one notch.

In accordance with the present invention, the live tool assembly may include a backlash adjustment assembly for adjusting the backlash between the drive gear assembly and the drive source of the machine tool. The backlash adjustment assembly may include at least one interchangeable spacer assembly located between one end of the drive shaft assembly and the drive gear assembly.

In accordance with the present invention, the live tool assembly may a sealing assembly. The sealing assembly may include a sealing plate secured to one end of the housing. The sealing plate includes an aperture formed therein through which the drive shaft assembly extends. The sealing plate does not contact the drive shaft assembly; rather, the sealing plate and the drive shaft assembly form a passageway there between. The sealing assembly further includes a flow of pressurized air. The flow of pressurized air flows through the passageway to maintain a positive pressure differential between the interior of the housing and the exterior of the live tool assembly.

The sealing assembly may include at least one sealing rib extending from one of the sealing plate and the drive shaft assembly. The sealing assembly may further include at least one sealing recess in another of the sealing plate and the drive shaft assembly corresponding to the at least one sealing rib. The at least one sealing rib is received within the at least one sealing recess. The at least one sealing rib, however, does not contact the side surfaces of the at least one sealing recess such that a gap exists between the at least one sealing rib and the at least one sealing recess. The flow of pressurized air flows through the gap.

It is also contemplated that the sealing assembly may include a first sealing rib extending from the sealing plate corresponding to a first sealing recess in the drive shaft assembly, such that the first sealing rib is received within the first sealing recess. Additionally, a second sealing rib may extend from drive shaft assembly into a second sealing recess in the sealing plate. The first sealing rib does not contact the side surfaces of the first sealing recess and the second sealing rib does not contact the side surfaces of the second sealing recess such that a gap exists between the first and second sealing ribs and the first and second sealing recesses. The flow of pressurized air flows through the gap.

In accordance with the present invention, the live tool assembly includes at least one bearing assembly located within the drive shaft receiving bore within the housing. The at least one bearing assembly rotatably supports the drive shaft assembly within the drive shaft receiving bore. The flow of pressurized air maintains the at least one bearing assembly under a substantially constant pressure such that there is no pressure differential across the at least one bearing assembly.

The present invention is also directed to a sealing assembly for preventing contaminants from entering a housing. In accordance with the present invention, the sealing assembly includes a first sealing component having an aperture formed therein. The first sealing component may further include a first sealing assembly surrounding a perimeter of the aperture. The sealing assembly also includes a second sealing component rotatably received within the aperture. The second sealing component includes a second sealing assembly, which is complementary to the first sealing assembly. The sealing assembly also includes a flow of pressurized air. The flow of pressurized air flows between the first sealing assembly and the second sealing assembly to maintain a positive pressure differential between an interior of the housing and an exterior of the housing.

In accordance with the present invention, the first sealing assembly does not contact the second sealing assembly. A gap exists between the first sealing assembly and the second assembly such that the flow of pressurized air flows through the gap.

In accordance with the present invention, the sealing assembly may include at least one sealing rib extending from one of the first sealing assembly and the second sealing assembly. The sealing assembly may further include at least one sealing recess in another of the first scaling assembly and the second sealing assembly corresponding to the at least one sealing rib. The at least one sealing rib is received within the at least one sealing recess. The at least one sealing rib does not contact side surfaces of the at least one sealing recess such that a gap exists between the at least one sealing rib and the at least one sealing recess. In accordance with the present invention, the flow of pressurized air flows through the gap.

The present invention is also directed to a live tool assembly adapted to be received within a machine tool assembly. The live tool assembly includes a housing having a drive shaft receiving bore formed therein, a drive shaft assembly rotatably received within the drive shaft receiving bore, and a drive gear assembly located at one end of the drive shaft assembly. The drive gear assembly is operatively coupled to the drive source of the machine tool with a coupling assembly for transferring rotational motion of the drive gear assembly to the drive shaft assembly. The live tool assembly further includes a backlash adjustment assembly for adjusting the backlash between the drive gear assembly and the drive source of the machine tool. The live tool assembly may further include a sealing assembly for preventing contaminants from entering an interior of the housing, wherein the sealing assembly maintains a positive pressure differential between the interior of the housing and an exterior of the live tool assembly.

The present invention is also directed to a method of sealing a live tool assembly for preventing contaminants from entering an interior of the live tool assembly. As discussed above, the live tool assembly may include a housing having a drive shaft receiving bore formed therein, and a drive shaft assembly rotatably received within the drive shaft receiving bore. In accordance with the present invention, the method of sealing may include the step of: providing a sealing arrangement between the housing and the drive shaft assembly. The method may further include the step of providing a flow of pressurized air to the sealing arrangement, such that the flow of pressurized air in connection with the sealing arrangement maintains a positive pressure differential between the interior and an exterior of the live tool assembly.

The step of providing a sealing arrangement may include the step of securing a sealing plate to the housing. The sealing plate may include a first sealing assembly mateable with a second sealing assembly located on the drive shaft assembly. As described above, the first sealing assembly does not contact the second sealing assembly such that a gap exists between the first sealing assembly and the second assembly. The step of providing a flow of pressurized air includes directing the flow of pressurized air into the gap between the first and second sealing assemblies.

### BRIEF DESCRIPTION OF THE DRAWINGS

The invention will be described in conjunction with the following drawings in which like reference numerals designate like elements and wherein:
Fig. 1 is a sectional view of a live tool in accordance with the present invention and a portion of the indexing tool turret in which it can be utilized; and
Fig. 2 is an enlarged view of the sealing arrangement for the live tool in accordance with the present invention.

### DETAILED DESCRIPTION OF THE PREFERRED EMBODIMENT

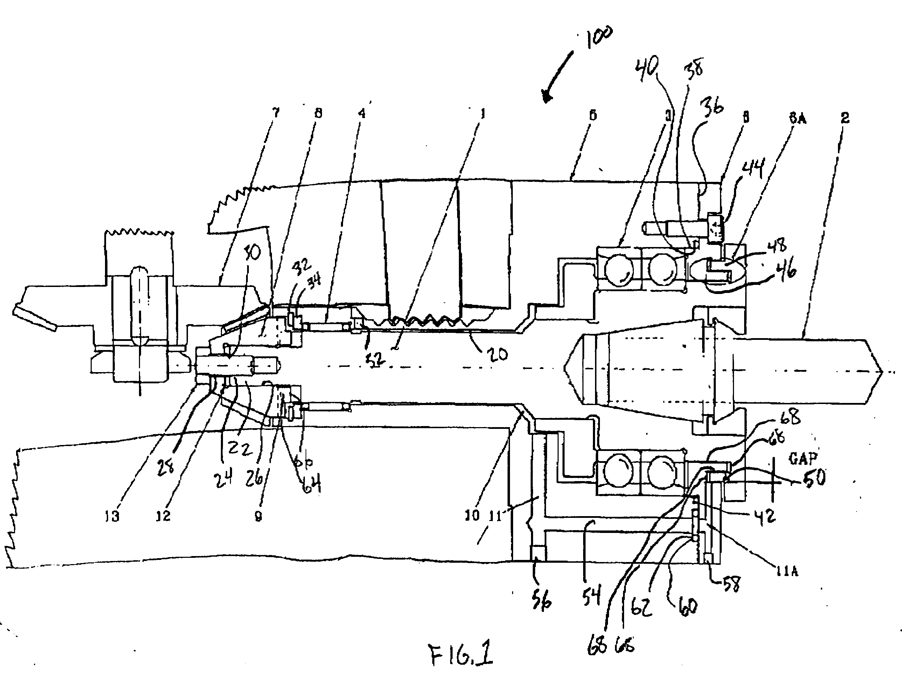

A live tool 10 according to the present invention will now be described in connection with Fig 1. The live tool 10 includes a housing 11 for mounting in a tool turret 1. The housing 11 is secured to the tool turret 1 in a conventional manner using an attachment assembly 2 that releasably engages the housing 11. The live tool 10 further includes a drive shaft 12. The drive shaft 12 is rotatably located within a bore 111 in the housing 11 by at least one bearing assembly located within the bore 111. The bore 111 does not support the drive shaft 12; rather, a clearance is provided between the inner diameter of the bore 111 and the outer diameter of the drive shaft 12, as shown in Fig. 1, for purposes that will be explained in greater detail below.

The at least one bearing assembly preferably includes at least a first bearing assembly 131 and a second bearing assembly 132. The first bearing assembly 131 preferably includes at least one needle bearing assembly. The second bearing assembly 132 preferably includes at least one ball bearing assembly. Two ball bearing assemblies are illustrated in Fig. 1. The present invention, however, is not limited to these bearing assemblies; rather, it is contemplated the needle bearing and ball bearing assembly may be replaced with other suitable bearing assemblies. The first bearing assembly 131 provides rotational support to the drive shaft 12 within the bore 111. The first bearing assembly 131 is secured within the bore 111 in the housing 11 using a retaining assembly 1311 and a thrust washer 1312. The second bearing assembly 132 provides both rotational and axial thrust support to drive shaft 12.

The drive shaft 12 includes a gear mounting assembly 121 located at one end of the drive shaft 12 for receiving a gear assembly 14 thereon. The gear assembly 14 is preferably a bevel gear that is adapted to engage a pinion gear assembly 3 on the turret tool 1. The present invention, however, is not limited to the use of bevel gears and pinion gear assemblies; rather, it is contemplated that other suitable linkages that permit the rotational engagement of the drive shaft 12 with the turret tool 1 are considered to be well within the realm of the present invention. The gear mounting assembly 121 includes a threaded bore 1211 for receiving a gear retaining bolt 1212 therein. The gear assembly 14 includes an inner bore 141 for engaging the gear mounting assembly 121 in a close tolerance. A spacer 142 is inserted into the inner bore 141 so as to be positioned between a bottom of the inner bore 141 and an end face of the gear mounting assembly 121. The gear retaining bolt 1212 extends though an aperture 143 in the gear assembly 14 and an aperture in the spacer 142 when located within the threaded bore 1211.

It is contemplated by the inventors of the present invention that the thickness of the spacer 142 can be adjusted. This can be accomplished by grinding the spacer 142 or by switching the spacer 142 with other spacers having different thicknesses. Adjusting the thickness of the spacer 142 permits adjustment of the backlash between the gear assembly 14 and the pinion gear assembly 3 associated with the tool turret 1. For instance, if a thinner spacer 142 is located within the bore 141, the gear assembly 14 will be moved to the right in FIG. 1, thereby decreasing the contact between the gear assembly 14 and the pinion gear assembly 3. Conversely, installing a thicker spacer 142 will move the gear assembly 14 to the left in FIG. 1, thereby increasing the contact between the gear assembly 14 and the pinion gear assembly 3.

The gear assembly 14 is locked to drive shaft 12 by a coupling assembly such that the rotational motion of the gear assembly 14 is transferred to the drive shaft 12. The coupling assembly includes a plurality of fingers 144 extending from a bottom surface of the gear assembly 14. The plurality of fingers 144 engage complementary notches 122 on drive shaft 12. is provides a substantial torque handling coupling not diminished by the backlash adjustment and prevents the gear assembly 14 from rotating with respect to drive shaft 12. The gear retaining bolt 1212 ensures that the plurality of fingers 144 remain engaged with the notches 122.

A cover sealing plate 15 is releasably attached to a front surface of housing 11. The plate 15 includes a flange surface 151 adapted to engage a bore 112 within the housing 11 to accurately position the plate 15 with respect to the housing 11, as shown in Fig. 1. A sealing assembly 113 is positioned in a counterbore in the bore 112. Alternatively, the sealing assembly 113 may be located with a recess (not shown) formed in the range surface 151 of the plate 15. The sealing assembly 113 provides a seal between plate 15 and housing 11. The sealing assembly 113 is preferably an o-ring seal. It, however, is contemplated that other suitable sealing assemblies may be provided to provide a seal between the housing 11 and the plate 15.

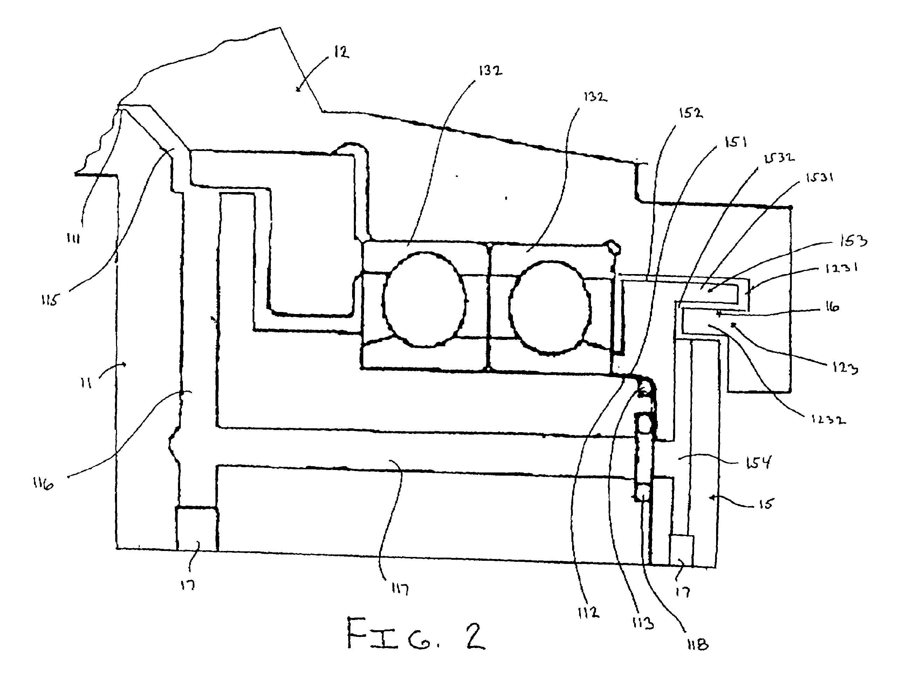

The sealing plate 15 is secured to the housing 11 using a plurality of fasteners 18. Each fastener 18 passes through an aperture in the plate 15 and is fastened within a corresponding bore within the housing 11. The bores are preferably threaded to engage the threaded fasteners 18. Although threaded fasteners are preferred, other fasteners including, but not limited to releasable pin assemblies, and friction fit fasteners may be employed to secure the sealing plate 15 to the housing 11. It is also contemplated that the sealing plate 15 may be integrally formed with the housing 11. A portion of the sealing plate 15 located within the bore 112 is adapted to engage a portion of the second bearing assembly 132 whereby the sealing plate 15 retains the second bearing assembly 132 within the housing 11, as shown in Fig. 2.

The sealing plate 15 includes an aperture 152 through which the drive shaft 12 extends. A sealing flange 153 extends around a perimeter of the aperture 152. The drive shaft 12 includes a complementary sealing flange 123. The complementary sealing flange 123 is adapted to interleave with the sealing flange 153 to provide a labyrinth seal indicated generally at 16 between the drive shaft 12 and the plate 15. The sealing flanges 153 and 123 are dimensioned so that they are not contact each other. In the presently preferred embodiment, a gap having a dimension of approximately .010" is located between the sealing flanges 153 and 123. In other words, the difference in diameters of the respective portions of the flanges is approximately .020". In this way, there is no contact between the sealing flange 123 of drive shaft 12 and the sealing flange 153 of plate 15 as drive shaft 12 rotates with respect to housing 11 when the live tool 10 is operated.

In accordance with the present invention, the sealing flange 153 includes at least one rib 1531 extending about the periphery of the aperture 152 in the sealing plate 15, as shown in Fig. 2. At least one corresponding recess 1532 extends around the periphery of the aperture 152 adjacent the rib 1531. The sealing flange 123 on the drive shaft 12 includes at least one recess 1231 corresponding to the at least one rib 1531. The sealing flange 123 further includes at least on rib 1232 corresponding to the at least one recess 1532. One rib 1531 of the sealing flange 153 is adapted to be received within the corresponding recess 1231 of the sealing flange 123. Furthermore, one rib 1232 of the sealing flange 123 is adapted to be received within the corresponding recess 1532 of the sealing flange 153. The present invention is not limited to a single rib and recess on each flange; rather, multiple ribs and recesses may be provided so long as for ever rib present on one flange and corresponding recess exists on the other flange. As described above, there is no contact between any of the ribs and recesses for the sealing flanges 123 and 153.

The housing 11 includes a bore 114 formed therein that operatively communicates with a pressurized air supply from the tool turret 1, as is conventionally known. The bore 114 extends through the housing 11 to bore 111. The pressurized air supplied from the tool turret 1 flows through the bore 114, the clearance between the bore 111 and the drive shaft 12 to a chamber 115 in the housing 11. A passageway 116 in housing 11 extends from the chamber 10 and is in fluid communication with another passageway 117 in the housing 11. The passageway 117 is in fluid communication with a passageway 154 in the sealing plate 15. The passageways 116 and 154 may be formed by drilling. The passageways 116 and 154 can be sealed using sealing plugs 17. The passageway 117 is in fluid communication with the gap formed between the sealing flange 123 and the sealing flange 153.

To seal the connection between the passageway 117 and the passageway 154, a sealing assembly 118 may be provided in a counter bore in the housing 11. Alternatively, the sealing assembly 118 and counter bore may be located on the sealing plate 15.

The operation of the labyrinth seal 16 will now be described. The pressurized air supplied from the tool turret 1 is fed though the bore 114 in the housing 11 into the clearance between the bore 111 and the drive shaft 12 into the chamber 115. The pressurized air continues through passageways 116 and 117 into passageway 154 where the air exits into the gap formed between the sealing flanges 123 and 153. The pressurized air passes through entire circumference between the sealing flanges 123 and 153. This pressurized air escaping through the gap between the sealing flanges 123 and 153 provides a positive pressure differential between the interior of the live tool 10 and the exterior. This prevents contaminants from entering the interior of the live tool from the exterior. Furthermore, this positive pressure differential helps to purge any contaminants in the gap or labyrinth seal 16. The seal created by the positive pressure differential and the sealing flanges 123 and 153 is basically frictionless since there is no component contact associated with the seal and thus, undesirable friction is minimized or eliminated from the sealing process.

During the operation of the live tool 10 at a high rotation speed, the centrifugal forces of the drive shaft 12 and the presence of the at least one rib 1232 on the sealing flange 123 of the drive shaft 12 also help prevent contaminants from entering the interior of the tool 10. The tortuous path of the gap between the sealing flanges 123 and 153 further inhibits contaminants from entering the live tool 10. When the live tool 10 is either stationary or rotating at a low speed, the air pressure within the gap between the rib 1232 of the sealing flange 123 and the sealing plate 15 from the passageway 154 maintains the positive differential seal preventing contaminants from entering the interior of the tool 10.

The pressurized air exiting the passageway 154 also pressurizes the gap between the sealing flanges 123 and 153. In this way, the pressure within the gap is substantially equal to the pressure within the chamber 115 so that the pressure on either side of the second bearing assembly 132 is equalized. There is no substantive pressure differential across the second bearing assembly 132. Since there is no pressure differential across the second bearing assembly 132, the air does not flow through second bearing assembly 132 and remove any lubrication from second bearing assembly 132. Similarly, there is no pressure differential to drive coolant through the second bearing assembly 132. As a result, coolant does not wash the lubricant from the second bearing assembly 132, which often occurs in conventional live tool designs.

Furthermore, the pressure at the bore 114 is the same as the pressure on the other side of first bearing assembly 131. As such, there is similarly no pressure differential across the first bearing assembly 131 to drive air or coolant through the first bearing assembly 131 and wash out or contaminate lubrication in the first bearing assembly 131.

The air pressure supply to the tool turret 10 is usually in the range of 75-100 psi. An adjustable flow valve may be positioned in the supply to adjust the air flow volume to the labyrinth seal 16. The flow valve may be a conventional needle valve. It is presently preferred to increase the air flow to the labyrinth seal 16 until bubbles can be seen exiting from the gap between the sealing flanges 123 and 153.

A cutting tool 4 for providing a cutting operation is removably engaged with the drive shaft 12. This invention, however, is not intended to be limited to live tools only for use with indexing tool turrets. The application of this invention to other type of tools and rotating drive mechanisms is considered to be well within the scope of the present invention.

While this invention has been described in connection with what is presently considered to be the most practical and preferred embodiment, it is to be understood that it is capable of further modifications and is not to be limited to the disclosed embodiment, and this application is intended to cover any variations, uses, equivalent arrangements or adaptations of the invention following, in general, the principles of the invention and including such departures from the present disclosure as come within known or customary practice in the art to which the invention pertains, and as may be applied to the essential features hereinbefore set forth and followed in the spirit and scope of the appended claims and their equivalents.

## Claims

1. A live tool assembly adapted to be received within a machine tool assembly, wherein the machine tool assembly includes a drive source, said live tool assembly comprising:
a housing having a drive shaft receiving bore formed therein;
a drive shaft assembly rotatably received within said drive shaft receiving bore;
a drive gear assembly located at one end of said drive shaft assembly, said drive gear assembly being operatively coupled to the drive source of the machine tool;
a coupling assembly for transferring rotational motion of said drive gear assembly to said drive shaft assembly; and
a sealing assembly for preventing contaminants from entering an interior of said housing, wherein said sealing assembly maintains a positive pressure differential between said interior of said housing and an exterior of said live tool assembly.

2. The live tool assembly according to claim 1, wherein said coupling assembly comprises:
at least one finger extending from one of a bottom surface of said drive gear assembly and said one end of said drive shaft assembly, wherein said bottom surface of said drive gear assembly being located adjacent said one end of said drive shaft assembly; and
at least one notch on one of said bottom surface of said drive gear assembly and said one end of said drive shaft assembly, wherein said at least one finger is received within said at least one notch.

3. The live tool assembly according to claim 2, wherein said coupling assembly further comprises a fastener for securing said drive gear assembly to said drive shaft assembly, whereby said at least one finger is maintained within said at least one notch.

4. The live tool assembly according to claim 1, further comprising a backlash adjustment assembly for adjusting the backlash between said drive gear assembly and the drive source of the machine tool.

5. The live tool assembly according to claim 4, wherein said backlash adjustment assembly includes at least one interchangeable spacer assembly located between one end of said drive shaft assembly and said drive gear assembly.

6. The live tool assembly according to claim 1, wherein said sealing assembly comprises:
a sealing plate secured to said housing at an end opposite said one end, said sealing plate having an aperture formed therein through which said drive shaft assembly extends, wherein said sealing plate and said drive shaft assembly form a passageway there between; and
a flow of pressurized air, wherein said flow of pressurized air flows through said passageway to maintain a positive pressure differential between said interior of said housing and the exterior of said live tool assembly.

7. The live tool assembly according to claim 6, wherein said sealing plate does not contact said drive shaft assembly.

8. The live tool assembly according to claim 6, wherein said sealing assembly further comprises:
at least one sealing rib extending from one of said sealing plate and said drive shaft assembly; and
at least one sealing recess in another of said sealing plate and said drive shaft assembly corresponding to said at least one sealing rib, wherein said at least one sealing rib is received within said at least one sealing recess.

9. The live tool assembly according to claim 8, wherein said at least one sealing rib does not contact side surfaces of said at least one sealing recess such that a gap exists between said at least one sealing rib and said at least one sealing recess.

10. The live tool assembly according to claim 9, wherein said flow of pressurized air flows through said gap.

11. The live tool assembly according to claim 6, wherein said sealing assembly further comprises:
a first sealing rib extending from said sealing plate;
a first sealing recess in said drive shaft assembly, wherein said first sealing rib is received within said first sealing recess;
a second sealing rib extending from drive shaft assembly; and
a second sealing recess in said sealing plate, wherein said second sealing rib is received within said second sealing recess.

12. The live tool assembly according to claim 9, wherein said first sealing rib does not contact side surfaces of said first sealing recess and said second sealing rib does not contact side surfaces of said second sealing recess such that a gap exists between said first and second sealing ribs and said first and second sealing recesses, wherein said flow of pressurized air flows through said gap.

13. The live tool assembly according to claim 6, further comprising at least one bearing assembly located within said drive shaft receiving bore within said housing, wherein said at least one bearing assembly rotatably supports said drive shaft assembly within said drive shaft receiving bore.

14. The live tool assembly according to claim 13, wherein said flow of pressurized air maintains said at least one bearing assembly under a substantially constant pressure such that there is no pressure differential across said at least one bearing assembly.

15. A sealing assembly for preventing contaminants from entering a housing, said sealing assembly comprising:
a first sealing component having an aperture formed therein, wherein said first sealing component further includes a first sealing assembly surrounding a perimeter of said aperture;
a second sealing component rotatably received within said aperture, wherein said second sealing component includes a second sealing assembly, wherein said second sealing assembly is complementary to said first sealing assembly; and
a flow of pressurized air, wherein said flow of pressurized air flows between said first sealing assembly and said second sealing assembly to maintain a positive pressure differential between an interior of the housing and an exterior of the housing.

16. The sealing assembly according to claim 15, wherein said first sealing assembly does not contact said second sealing assembly.

17. The sealing assembly according to claim 16, wherein a gap exists between said first sealing assembly and said second assembly such that said flow of pressurized air flows through said gap.

18. The sealing assembly according to claim 15, further comprising:
at least one sealing rib extending from one of said first sealing assembly and said second sealing assembly; and
at least one sealing recess in another of said first sealing assembly and said second sealing assembly corresponding to said at least one sealing rib, wherein said at least one sealing rib is received within said at least one sealing recess.

19. The sealing assembly according to claim 18, wherein said at least one sealing rib does not contact side surfaces of said at least one sealing recess such that a gap exists between said at least one sealing rib and said at least one sealing recess.

20. The sealing assembly according to claim 19, wherein said flow of pressurized air flows through said gap.

21. A live tool assembly adapted to be received within a machine tool assembly, wherein the machine tool assembly includes a drive source, said live tool assembly comprising:
a housing having a drive shaft receiving bore formed therein;
a drive shaft assembly rotatably received within said drive shaft receiving bore;
a drive gear assembly located at one end of said drive shaft assembly, said drive gear assembly being operatively coupled to the drive source of the machine tool;
a coupling assembly for transferring rotational motion of said drive gear assembly to said drive shaft assembly; and
a backlash adjustment assembly for adjusting the backlash between said drive gear assembly and the drive source of the machine tool.

22. The live tool assembly according claim 21, further comprising a sealing assembly for preventing contaminants from entering an interior of said housing, wherein said sealing assembly maintains a positive pressure differential between said interior of said housing and an exterior of said live tool assembly.

23. The live tool assembly according to claim 22, wherein said sealing assembly comprises:
a sealing plate secured to said housing at an end opposite said one end, said sealing plate having an aperture formed therein through which said drive shaft assembly extends, wherein said sealing plate and said drive shaft assembly form a passageway there between; and
a flow of pressurized air, wherein said flow of pressurized air flows through said passageway to maintain a positive pressure differential between said interior of said housing and the exterior of said live tool assembly.

24. The live tool assembly according to claim 21, wherein said backlash adjustment assembly includes at least one interchangeable spacer assembly located between one end of said drive shaft assembly and said drive gear assembly.

25. The live tool assembly according to claim 24, wherein said coupling assembly comprises:
at least one finger extending from one of a bottom surface of said drive gear assembly and said one end of said drive shaft assembly, wherein said bottom surface of said drive gear assembly being located adjacent said one end of said drive shaft assembly; and
at least one notch on one of said bottom surface of said drive gear assembly and said one end of said drive shaft assembly, wherein said at least one finger is received within said at least one notch.

26. The live tool assembly according to claim 25 wherein said coupling assembly further comprises a fastener for securing said drive gear assembly to said drive shaft assembly, whereby said at least one finger is maintained within said at least one notch.

27. The live tool assembly according claim 24, further comprising a sealing assembly for preventing contaminants from entering an interior of said housing, wherein said sealing assembly maintains a positive pressure differential between said interior of said housing and an exterior of said live tool assembly.

28. The live tool assembly according to claim 27, wherein said sealing assembly comprises:
a sealing plate secured to said housing at an end opposite said one end, said sealing plate having an aperture formed therein through which said drive shaft assembly extends, wherein said sealing plate and said drive shaft assembly form a passageway there between; and
a flow of pressurized air, wherein said flow of pressurized air flows through said passageway to maintain a positive pressure differential between said interior of said housing and the exterior of said live tool assembly.

29. A method of sealing a live tool assembly for preventing contaminants from entering an interior of the live tool assembly, the live tool assembly includes a housing having a drive shaft receiving bore formed therein, and a drive shaft assembly rotatably received within the drive shaft receiving bore, said method comprising the steps of:
providing a sealing arrangement between the housing and the drive shaft assembly; and
providing a flow of pressurized air to said sealing arrangement, wherein said flow of pressurized air in connection with said sealing arrangement maintains a positive pressure differential between the interior and an exterior of the live tool assembly.

30. The method according to claim 29, wherein said step of providing a sealing arrangement includes the step of securing a sealing plate to the housing, wherein said sealing plate includes a first sealing assembly mateable with a second sealing assembly located on the drive shaft assembly.

31. The method according to claim 30, wherein said first sealing assembly does not contact said second sealing assembly such that a gap exists between said first sealing assembly and said second assembly.

32. The method according to claim 31, wherein said step of providing a flow of pressurized air includes directing said flow of pressurized air into the gap between the first and second sealing assemblies.
